# EUROPÄISCHE PATENTANMELDUNG

(11) **EP 1 911 702 A1**
(43) Veröffentlichungstag der Anmeldung: **16.04.2008**
(21) Anmeldenummer: 07118311.5
(22) Anmeldetag: 11.10.2007
(51) Int. Cl.: B65G 53/24

(54) **Fördervorrichtung und Förderschlauch für feinteilige Partikel**

(30) Priorität: 11.10.2006 DE 102006048112
(71) Anmelder: Tronox Pigments GmbH, 47829 Krefeld (DE)
(72) Erfinder: Degen, Jörg, 47800 Krefeld (DE); Phlipsen, Frank, 47239 Duisburg (DE); Mächler, Elke, Dr., 01737 Kurort Hartha (DE)
(74) Vertreter: Viering, Jentschura & Partner

(57) **Zusammenfassung**

Bei einer Fördervorrichtung zur pneumatischen Förderung feinteiliger Partikel umfassend eine druckluftbeaufschlagte, eine Innenschicht aus einem polymeren, insbesondere elastomeren, Werkstoff aufweisenden Förderleitung (7) mit daran in diese einmündend angeordneten Einblasöffnungen (13) und/oder Düsen und/oder Ventilen (3), die mit einer der Förderleitung (7) Sekundär- oder Nebenluft zuführenden druckluftbeaufschlagten Bypass-Leitung (9) in Leitungsverbindung stehen, soll eine Lösung geschaffen werden, die es ermöglicht, eine Förderleitung zur pneumatischen Förderung feinteiliger Partikel kostengünstig zu realisieren und hinsichtlich zu vermeidender Anbackungserscheinungen von in der Förderleitung geförderten Partikeln mit verbesserten Eigenschaften auszustatten. Dies wird dadurch erreicht, dass die druckluftbeaufschlagte Förderleitung (7) aus mindestens einem im druckluftbeaufschlagten Förderzustand eine Querkontraktion ermöglichenden, frei ausdehnungsfähig ausgebildeten und gelagerten, unter Verwendung eines elastomeren Werkstoffes hergestellten Förderschlauch (1, 1') aufgebaut ist, wobei der Förderschlauch (1, 1') druckabhängig radial und umfangsmäßig (aus)dehnbar und sich wieder zusammenziehend ausgebildet und die Ausdehnung der Förderleitung (7) und/oder des mindestens einen Förderschlauches (1, 1') auf eine Außenumfangsvergrößerung von maximal 25 % bezogen auf den Außenumfang im unbelasteten Nichtförderzustand beschränkt ist.

## Beschreibung

Die Erfindung richtet sich auf eine Fördervorrichtung zur pneumatischen Förderung feinteiliger Partikel, umfassend eine druckluftbeaufschlagte, eine Innenschicht aus einem polymeren, insbesondere elastomeren, Werkstoff aufweisende Förderleitung mit daran in diese einmündend angeordneten Einblasöffnungen und/oder Düsen und/oder Ventilen, die mit einer der Förderleitung Sekundär- oder Nebenluft zuführenden druckluftbeaufschlagten Bypass-Leitung in Leitungsverbindung stehen. Die Erfindung richtet sich weiterhin auf einen Förderschlauch einer mit mindestens einem Förderschlauch und eine daraus aufgebaute, druckluftbeaufschlagte und eine Innenschicht aus einem polymeren, insbesondere elastomeren, Werkstoff aufweisende Förderleitung umfassenden Fördervorrichtung zur pneumatischen Förderung feinteiliger Partikel, wobei die Förderleitung daran in diese einmündend angeordnete Einblasöffnungen und/oder Düsen und/oder Ventile, die mit einer der Förderleitung Sekundär- oder Nebenluft zuführenden druckluftbeaufschlagten Bypass-Leitung in Leitungsverbindung stehen, aufweist. Schließlich richtet sich die Erfindung auf die Verwendung einer Fördervorrichtung und einen Förderschlauch der vorstehenden Art sowie ein Verfahren zur pneumatischen Förderung feinteiligen, insbesondere kohäsiven und partikelförmigen Schüttgutes, vorzugsweise aus Metalloxidpigment oder Ruß, wobei das Schüttgut in einer druckluftbeaufschlagten Förderleitung mit Zuführmöglichkeit von Sekundär- oder Nebenluft durch Bypass-Öffnungen in der Förderleitungswand pneumatisch gefördert wird.

Feinteilige Partikel, wobei unter feinteiligen Partikeln solche mit einer durchschnittlichen Partikelgröße von < 80 µm verstanden werden, wie beispielsweise Eisenoxidpigmente, Titandioxidpigmente oder auch Rußpartikel, sind als Schüttgut in Förderleitungen über längere Strecken pneumatisch nur schwer zu fördern. Bei der pneumatischen Förderung dieser feinteiligen Partikel in einer Förderleitung kommt es häufig zu Verstopfungen infolge von Pfropfenbildungen innerhalb der Förderleitung, so dass dann der Querschnitt blockiert wird und für eine Weiterförderung des Produktes erst wieder freigelegt werden muss.

Feinteilige, pulverförmige Partikel werden pneumatisch im Förderzustand der Flugförderung oder der Strähnenförderung und insbesondere bei Vorliegen von kohäsiven und abrasiven Pulvern auch im Förderzustand der Pfropfenförderung in der Förderleitung gefördert. Dabei nimmt von der Flugförderung zur Pfropfenförderung die Fördergeschwindigkeit ab und die Beladung, d. h. die Schüttgutkonzentration im Fördermedium, zu. Für die Förderung von kohäsiven Partikeln, d. h. zum Anbacken neigenden feinteiligen Partikeln, finden in der Praxis Rohrleitungen Verwendung, die mit einer Innenschicht oder einem Innenliner aus Gummi versehen sind. Das Gummi hat den Vorteil, dass es eine glatte Förderwand ausbildet und die Gefahr der Anbackungen vermindert. Für die Förderung feinen Pulvers im Förderzustand der Dichtstromförderung ist es darüber hinaus bekannt, die Förderleitung mit darin einmündenden Düsen oder Ventilen zu versehen, die mit einer Bypass-Leitung in Verbindung stehen, von der aus bei Druckabfall in der Förderleitung Sekundär- oder Neben- oder Bypass-Luft in die Förderleitung eingeleitet wird, wodurch eine störungsfreie Dichtstromförderung erreicht wird. Nachteilig bei diesen bekannten Systemen ist, dass die Gummiinnenschicht oder der Gummiinnenliner innerhalb eines Umhüllungsrohres aus Metall angeordnet ist. Dies bedingt aufwändige Produktionsprozesse, mit denen die Gummiinnenschicht auf die Rohrinnenwand aufgebracht wird oder ein Gummiinnenliner in ein Rohr eingebracht wird. Auch ist bei den für ein zerstörungsfreies pneumatisches Fördern von feinteiligem, pulverigem Schüttgut, insbesondere Eisenoxid- und Titandioxidpartikeln oder Rußpartikeln, notwendigen Förderdrücken und damit korrelierenden Fördergeschwindigkeiten immer noch häufig ein Verstopfen der Leitungen festzustellen.

Aus der Zeitschrift "Schüttgut, Ausgabe 7 (2001) 1" sind auf den Seiten 60 und 61 bekannte Förderleitungen für die Förderung von Pigmenten beschrieben. So ist es zum einen bekannt, mit einer netzförmigen Armierung versehene Gummileitungen für die Flugförderung von Pigmenten zu verwenden. Zur Abreinigung der Innenseiten dieser Leitungen und zur Verhinderung der Ausbildung von Verstopfungen werden diese Leitungen an einem Schlauchende periodisch geschlossen, was in der Praxis mit Hilfe eines über die Förderleitung gestülpten Quetschventiles erfolgt. Aufgrund des kurzzeitigen Verschlusses erweitert sich der Grunddurchmesser (X) des Gummischlauches bzw. der Förderleitung auf einem größeren Reinigungsdurchmesser (Y). Mit dieser radialen Ausdehnung ist eine Längenverkürzung der Förderleitung bzw. des Gummischlauches unter der erhöhten Druckbelastung und der damit zusammenhängenden Durchmessererweiterung verbunden. Nachteilig bei diesen Förderleitungen ist, dass zum einen durch den kurzfristig erzeugten Verschluss der Förderleitung die Förderung innerhalb der Förderleitung unterbrochen, d. h. der Förderzustand aufgehoben wird. Zum anderen wirkt der Verschluss der Förderleitung immer über die gesamte Länge der Förderleitung, so dass über die gesamte Länge der Förderleitung der Förderzustand zusammenbricht und sich in der Förderleitung befindliches Material absetzt. Dies ist insbesondere dann von Nachteil, wenn in der Förderleitung nicht pneumatisch mit einer Flugförderung, sondern (auch) mit einer Dichtstromförderung Produkt gefördert werden soll. Eine Dichtstromförderung ist nämlich mit einer deutlich höheren Beladung und geringeren Fördergeschwindigkeit bei höherem Förderdruck verbunden. Würde man in diesem Falle die Förderleitung periodisch durch Schließen eines Quetschventiles verschließen, bräuchte man nicht nur ein gegen den erhöhten Förderdruck von üblicherweise mehr als 8 bar anarbeitendes Quetschventil, sondern es würde sich aufgrund der höheren Beladung sehr viel Fördermaterial in der Förderleitung absetzen, was anschließend bei den geringen Fördergeschwindigkeiten nur schwer wieder fluidisierbar wäre und sofort Keimzellen für weitere Anbackungen und Verstopfungen bilden würde. Andererseits gibt es hoch abrasiv wirkende Pigmente, die nicht mit den hohen Fördergeschwindigkeiten der Flugstromförderung gefördert werden können, da diese aufgrund ihrer abrasiven Wirkung die Innenwandseite der Förderleitung bei den hohen Fördergeschwindigkeiten der Flugstromförderung beschädigen. Förderleitungen in Form radial ausdehnfähiger Gummischläuche sind daher bekannt als Förderleitung für Flugstromförderung, d. h. bei hoher Fördergeschwindigkeit, niedriger Beladung und niedrigem Druck.

Bei der Dichtstromförderung geht man zur Vermeidung bzw. zum Abbau von Stopfen einen anderen Weg. Dort wird die Leitung mit einer Bypass-Leitung versehen, über die vorzugsweise dem maximalen Förderdruck entsprechende Bypassluft dann eingeblasen wird, wenn sich ein Stopfen und damit hinter dem Stopfen bzw. im Bereich des Stopfens ein Druckabfall eingestellt. Auf diese Weise wird der Pfropfen beseitigt. Solche Förderleitungen mit Bypassleitung bestehen entweder aus einem Metallrohr mit Inliner aus Gummi oder aus Bypass-Förderleitungen, die aus einem Spiralgummischlauch gebildet sind. Bei dem Spiralgummischlauch handelt es sich in der Regel um metallarmierte Leitungen, die eine radiale Erweiterung oder Durchmessererweiterung nicht ermöglichen. Treten bei diesen Schlauchleitungen nun Stopfen oder Pfropfen auf, so führt dies zu einer Längsdehnung des jeweiligen Schlauches oder Inliners für den Zeitraum, bis durch die Wirkung der Bypassluft die Verstopfung aufgehoben ist. Mit der Zeit verlängern sich die Inliner dauerhaft und irreversibel und reißen aus der Ventilbefestigung für den Anschluss der Bypassleitungen aus oder reißen vom Umhüllungsrohr ab.

Aus der CH 669 169 ist eine Förderleitung zum pneumatischen Fördern von Schüttgütern bekannt, bei welcher ein Gummischlauch als Inliner in einem Außenrohr angeordnet ist. Bei dieser Förderleitung dehnt sich während der Förderung der im Ausgangszustand einen um 10 bis 20 % kleineren Durchmesser aufweisende Gummischlauch bei Druckbeaufschlagung der Förderleitung aus und legt sich innen an die Innenwandung des umhüllenden Außenrohres an. Kommt es nun zu einer Verstopfung, so fällt der Druck in Förderrichtung hinter der Verstopfung ab und der Gummischlauch zieht sich auf seine ursprüngliche Ausgangsgröße zusammen. Allerdings kommt es vor der Verstopfung zu einem Druckanstieg und da der Inliner bereits an der Innenwandung des Umhüllungs- bzw. Außenrohres anliegt, zu der vorstehend beschriebenen Längenausdehnung mit der Gefahr, dass Ventilanschlüsse abreißen oder der Inliner ausreißt.

Die im Zusammenhang mit Bypasssystemen weiterhin verwendeten Spiralgummischlauchleitungen weisen eine Metallarmierung auf, die eine Durchmesservergrößerung und Aufweitung des Gummirohres im Wesentlichen verhindert. Bei diesen Leitungen werden Verstopfungen oder Pfropfen allein durch die Bypassluft, die Verstopfungen in Strömungsrichtung des Materials von der rückwärtigen Seite der Verstopfung her auflöst, beseitigt. Hierdurch werden die aus der Längen- und Durchmesserveränderung bei den vorstehenden Inlinersystemen auftretenden Nachteile vermieden. Es wird aber andererseits auf die unterstützende Querkontraktion, die sich aus der Eigenelastizität von Gummi oder ähnlichen elastomeren Werkstoffen ergibt, als unterstützende Wirkung bei der Beseitigung von Wandansätzen verzichtet. Bei den BypassSystemen handelt es sich um pneumatische Langsamfördersysteme, die den Schüttguttransport bei hoher Beladung und niedrigen Gas- und Feststoffgeschwindigkeiten ermöglichen. Der Ansatz dieser Systeme besteht darin, durch niedrige Fördergeschwindigkeiten die Gefahr von Wandansatzbildung bereits weitgehend herabzumindern und mit Hilfe der Bypassluft entstandene Ansätze zu beseitigen. Hintergrund ist, dass die Ansätze zum Teil auch auf Zerstörung der transportierten Körner zurückzuführen sind und die Zerstörung mit der dritten Potenz der Partikelgeschwindigkeit ansteigt. Durch niedrige Fördergasgeschwindigkeiten soll hier also primär zunächst eine Ansatzbildung vermieden werden.

Der Erfindung liegt daher die Aufgabe zugrunde, eine Lösung zu schaffen, die es ermöglicht, eine Förderleitung zur kontinuierlichen pneumatischen Förderung feinteiliger Partikel kostengünstig zu realisieren und hinsichtlich zu vermeidender Anbackungserscheinungen von in der Förderleitung geförderten Partikeln mit verbesserten Eigenschaften auszustatten.

Bei einer Fördereinrichtung der eingangs bezeichneten Art wird diese Aufgabe erfindungsgemäß dadurch gelöst, dass die druckluftbeaufschlagte Förderleitung aus mindestens einem im druckluftbeaufschlagten Förderzustand eine Querkontraktion ermöglichenden, frei ausdehnungsfähig ausgebildeten und gelagerten, unter Verwendung eines elastomeren Werkstoffes hergestellten Förderschlauch aufgebaut ist, wobei der Förderschlauch druckabhängig radial und umfangsmäßig (aus)dehnbar und sich wieder zusammenziehbar ausgebildet und die Ausdehnung der Förderleitung und/oder des mindestens einen Förderschlauches auf eine Außenumfangsvergrößerung von maximal 25 % bezogen auf den Außenumfang im unbelasteten Nichtförderzustand beschränkt ist.

Dadurch, dass die eigentliche Förderleitung als Förderschlauch ausgebildet ist, der zum einen unter Verwendung eines elastomeren Werkstoffes frei ausdehnungsfähig ausgebildet ist und der zum anderen frei ausdehnungsfähig gelagert ist, ist eine Förderleitung geschaffen, die durch ihre Flexibilität und Ausdehnungsfähigkeit eine Eigenbeweglichkeit besitzt. Diese Eigenbeweglichkeit führt dazu, dass Verstopfungen, Anbackungen nicht entstehen, zumindest bereits bei ansatzweiser Bildung wieder beseitigt oder aber auch nach ihrer Entstehung wieder beseitigt werden. Sobald Pfropfen oder Verstopfungen und damit verbundene Verringerungen des Förderquerschnittes auftreten, führt dies dazu, dass in Strömungsrichtung vor dieser Stelle zunächst ein Druckanstieg in der Förderleitung festzustellen ist und hinter dieser Stelle ein Druckabfall festzustellen ist. Der Druckanstieg bewirkt nun, dass der Schlauch sich ausdehnt, der Förderquerschnitt vergrößert wird, und damit die vorgesehene Fördermenge wieder auch durch den verengten Querschnitt gefördert wird, anschließend der Druck aber wieder abfällt und dadurch die Ausdehnung des Förderschlauches wieder vermindert bzw. zurückgeführt wird. Durch diese aus Aufblähen und wieder Zusammenfallen bestehende Eigenbewegung wird ein "Rütteleffekt" auf die anbackenden Partikel ausgeübt, der zur Auflösung dieses Pfropfens, dieser Anbackung beiträgt. Dies wird auch dadurch unterstützt, dass die Ausdehnung in radialer Richtung des Förderschlauches gleichzeitig ein Zusammenziehen in längsaxialer Richtung mit sich bringt, so dass an der entsprechenden Ausdehnungsstelle im Förderschlauch eine überlagerte Dehnung mit anschließender Rückführung in den Ursprungszustand der flexiblen, elastischen, elastomeren, zumindest die Innenseite des Förderschlauches bildenden Materialwand in radialer und längsaxialer Richtung des Förderschlauches erfolgt. Weiterhin bewirkt ein starkes Zusetzen oder eine Pfropfenbildung in der Förderleitung an der Stelle des Pfropfens alsbald einen Druckabfall. Wenn ein solcher Druckabfall dann unter einer Bypass-Düse oder einem Bypass-Ventil entlangströmt oder sich dort festsetzt, wird Sekundär- oder Neben- oder Bypass-Luft in die Förderleitung eingeblasen und löst dadurch den Pfropfen oder die Anbackung auf. Die Bypass-Luft bzw. die Bypass-Düse oder das Bypass-Ventil sind dabei üblicherweise so eingestellt, dass bei Anliegen des üblichen Förderdruckes keine Sekundär-, Neben- oder Bypass-Luft in die Förderleitung eingeblasen oder eingeleitet wird. Für die Förderung des besonders kohäsiven aber auch abrasiven Titandioxidpigments hat es sich allerdings als vorteilhaft herausgestellt, dem pneumatischen Förderstrom in der Förderleitung kontinuierlich und permanent einen geringen Anteil Bypass-Luft durch die Einblasöffnungen und/oder Düsen und/oder Ventile zuzuführen. Hierdurch wird dem Förderschlauchinnenraum ständig Bypass-Luft von der Bypass-Leitung zugeführt, was die Fluidisierung des Titandioxidpigments im Förderschlauchinnenraum fördert und unterstützt. Es ist dann möglich, bei aufgrund einer Pfropfenbildung erfolgendem Anstieg des Förderdruckes in der Förderleitung gleichfalls und entsprechend den Druck in der Bypass-Leitung anzuheben, so dass dann aufgrund des zwischen in Strömungsrichtung vorderer und hinterer Seite des Pfropfens bestehenden Druckunterschieds aus den Einblasöffnungen und/oder Düsen und/oder Ventilen Bypass-Luft in den Pfropfen oder in Förderrichtung hinter den Pfropfen gelangt. In einer Förderleitung lässt sich somit eine Flugförderung oder eine Strähnenförderung oder eine Dünnstromförderung oder eine Dichtstromförderung ausbilden, die jeweils mit kontinuierlicher und permanenter oder mit periodischer und bedarfsgerechter Sekundär- oder Nebenluftunterstützung fördert.

Die erfindungsgemäße Fördervorrichtung ist auch kostengünstig herstellbar, da lediglich ein auf die gewünschten Förderbedingungen, d. h. den gewünschten Druck und die gewünschten Förderleitungsdurchmesser abgestimmter Förderschlauch zur Verfügung gestellt werden muss, in dem dann bereits die Zuführöffnungen für die Sekundär- oder Nebenluft zuleitende Düsen und/oder Ventile vorgesehen, insbesondere diese Düsen und Ventile oder Öffnungen bzw. Rohrstücke zur Aufnahme der Düsen und Ventile in die Rohrwand des elastomeren, vorzugsweise aus Gummi bestehenden Förderschlauches mit einvulkanisiert sind. Es ist kein Umhüllungsrohr oder Stützrohr notwendig. Es entfallen Arbeiten, die notwendig sind, wenn beispielsweise ein Gummiinliner in ein Rohr eingezogen werden muss.

Mit besonderem Vorteil ist die erfindungsgemäß ausgestaltete Förderleitung insbesondere bei der pneumatischen Förderung von Titandioxidpigment einsetzbar. Titandioxidpigment weist auf harten, wenig nachgiebigen Oberflächen, beispielsweise auf Stahl, eine stark abrasive Wirkung auf, die bei aus Stahl oder Metall bestehenden pneumatischen Förderleitungen dazu führt, dass diese abnutzungsbedingt geringe Standseiten aufweisen. Diese nachteilige abrasive Wirkung von Titandioxidpigment kommt bei der erfindungsgemäßen Förderleitung aufgrund der Ausgestaltung der Innenseite des dabei verwendeten Förderschlauches mit einem elastomeren, elastischen Material nicht zur Entfaltung. Das elastische, elastomere Material federt offenbar die Schläge auftreffender Titandioxidpartikel ab und federt diese in den Förderstrom zurück, so dass eine übermäßige Verschleißwirkung auf diese Innenwandfläche nicht ausgeübt wird, jedenfalls nicht feststellbar ist. Erfindungsgemäße Förderleitungen zeichnen sich durch deutlich verbesserte, d. h. verlängerte, Standzeiten aus.

Weiterhin wird dadurch die Gebrauchsfähigkeit und die kontinuierliche Förderung durch die erfindungsgemäße Förderleitung aus einem elastomeren Werkstoff sichergestellt, dass die umfangsmäßige Dehnung auf ein Maß von 25 % beschränkt ist. Beispielsweise ergibt sich durch diese Beschränkung eine Umfangsdehnung von lediglich ca. 3 bis 4 mm bei einem Gummischlauch mit einer Nennweite von 100 mm und einem Förderdruck von 4 bar. Insgesamt ist der Schlauch dabei dann so steif, dass sich dadurch eine Längenverkürzung von nur 1 mm einstellt.

In Ausgestaltung sieht die Erfindung vor, dass der Förderschlauch förderdruckabhängig derart ausdehnungsfähig ausgelegt und ausgebildet ist, dass die umfangsmäßige Ausdehnung seines Förderquerschnittes im druckluftbeaufschlagten Förderzustand auf eine Vergrößerung seines Außenumfanges im Förderquerschnitt um höchstens 25 %, insbesondere im Bereich von 0,5-25 %, vorzugsweise zwischen 1 und 10 %, besonders bevorzugt zwischen 2 und 6 % gegenüber dem Außenumfang im unbelasteten Nicht-Förderzustand beschränkt ist.

Durch diese Maßnahme wird ein zwar flexibler und ausdehnungsfähiger Förderschlauch zur Verfügung gestellt, der aber in seiner Flexibilität und Ausdehnungsfähigkeit beschränkt ist, damit eine anstehende Druckerhöhung nicht dazu führt, dass der Förderschlauch wie ein Luftballon aufgeblasen und somit die gewünschte Eigenbewegung gegebenenfalls nicht realisiert wird. Für einen Förderschlauch mit einer Nennweite von 100 mm hat es sich beispielsweise als zweckmäßig erwiesen, seine radiale Ausdehnungsfähigkeit so weit zu beschränken, dass sich bei den gegebenen Förderbedingungen, d. h. insbesondere dem einem anstehenden Förderdruck von 4 bar und der gewünschten Volumenstromdichte des Fördergutes eine Durchmesservergrößerung auf höchstens 105 mm einstellt und die Vergrößerung des Umfangs auf 3 bis 4 mm beschränkt ist, wobei ebenfalls die Längendehnung auf 1 mm begrenzt ist.

Damit die vorstehend beschriebene gewünschte Eigenbewegung ermöglicht wird, ist es gemäß Ausgestaltung der Erfindung weiterhin zweckmäßig, wenn der Förderschlauch im druckluftbeaufschlagten Förderzustand eine gleichzeitig expandierende und kontraktierende, insbesondere peristaltische Bewegung ermöglichend ausgebildet und gelagert ist. Hierunter ist zu verstehen, dass am Ort einer sich bildenden Anbackung oder eines sich gebildet habenden Pfropfens eine Ausdehnung des Förderschlauches sowohl in radialer Richtung des betroffenen Förderquerschnittes, gegebenenfalls auch in Längsrichtung über die Länge des sich gebildet habenden Pfropfens unter Ausbildung einer nach außen gewölbten Stelle oder eines nach außen gewölbten Bereiches im Förderschlauch möglich ist, wobei gleichzeitig die Gesamtlänge des beispielsweise ca. 6 m betragenden Förderschlauches sich in kontraktierender Weise verkürzt. Das für die Auswölbung benötigte Material bzw. die Auswölbung an sich bewirkt natürlich in Längsrichtung wirkende Zugkräfte, die auf das sonstige Schlauchwandmaterial bzw. das elastomere Schlauchwandmaterial ausgeübt werden.

Um diese insbesondere peristaltische Bewegung zu ermöglichen, zeichnet sich die Erfindung weiterhin zum einen dadurch aus, dass der Förderschlauch umhüllungsfrei ausgebildet und gelagert ist, und zum anderen dadurch, dass der Förderschlauch frei ausdehnungsfähig in beabstandeten Unterstützungselementen gelagert ist. Insbesondere kann der Förderschlauch hängend angeordnet sein, wobei die beabstandeten Unterstützungselemente lediglich der Schwerkraft entgegenwirken sollen, im Übrigen aber eine Relativbewegung der Schlauchwand bzw. des Förderschlauches zu dem jeweiligen Unterstützungselement ermöglichen.

Besonders günstig und einfach lassen sich die Halterungen für den Förderschlauch ausbildenden Unterstützungselemente durch Bänder oder Schlaufen bilden, die vorzugsweise aus einem textilen oder textilähnlichen Material bestehen. Die Erfindung zeichnet sich daher weiterhin dadurch aus, dass der Förderschlauch frei ausdehnungsfähig in schlaufenförmigen Unterstützungselementen, insbesondere Bändern, vorzugsweise aus einem textilen Material, hängend gehalten ist.

Ein besonders günstiger Werkstoff zur Herstellung des Förderschlauches ist Gummi, das aus natürlichem oder synthetischem Kautschuk oder Mischungen daraus hergestellt ist. Zumindest sollte der Förderschlauch unter Verwendung dieser Materialien hergestellt sein. Die Erfindung sieht daher vor, dass der Förderschlauch unter Verwendung von Gummi, natürlichem oder synthetischem Kautschuk und/oder Mischungen daraus hergestellt ist oder zumindest im Wesentlichen aus einem oder mehreren dieser Materialien besteht.

Um die gewünschte, begrenzte Ausdehnungsfähigkeit zu erreichen, aber dennoch eine kostengünstige Fertigung zu ermöglichen, sieht die Erfindung in Ausgestaltung weiterhin vor, dass der Förderschlauch metalleinlagefrei oder drahteinlagefrei oder metallarmierungsfrei oder drahtarmierungsfrei ausgebildet ist.

Vorzugsweise weist der Förderschlauch eine innenseitige Gummischicht mit einer darum angeordneten druckbeständigen Trägerschicht, vorzugsweise in Form einer gegenüber Gummi weniger ausdehnungsfähigen Kunststoff- oder Textilarmierung, insbesondere eines Textilgewebes, auf, was die Erfindung ebenfalls vorsieht.

Um den Anschluss einer Bypass-Druckluftleitung günstig realisieren zu können, sieht die Erfindung auch vor, dass der Förderschlauch in seine Umfangswand einvulkanisierte Rohrstutzen zur Aufnahme der Einblasöffnungen oder der Düsen oder Ventile und/oder einvulkanisierte Einblasöffnungen und/oder einvulkanisierte Düsen und/oder einvulkanisierte Ventile aufweist.

Hierbei ist es möglich vorzusehen, dass der Förderschlauchinnenraum in Leitungsverbindung mit der Bypass-Leitung steht.

Ebenso kann gemäß Weiterbildung der Erfindung vorgesehen sein, dass längsendseitig jeweils ein Anschlussflansch aus Metall an den Förderschlauch anvulkanisiert ist oder in diesen einvulkanisiert ist oder dass längsendseitig jeweils eine Anschlussfläche aus Förderschlauchmaterial als Anlagefläche für einen insbesondere metallischen Anschlussflansch ausgebildet ist. Hierdurch wird eine kostengünstig herzustellende Verbindungs- und Anschlussmöglichkeit mehrerer Förderschläuche zur Ausbildung einer längeren Förderleitung geschaffen.

Da Förderleitungen und somit auch der erfindungsgemäße Förderschlauch auf den jeweiligen Anwendungszweck hin ausgerichtet und insbesondere auch auf den zu fördernden Volumenstrom hin ausgelegt werden, der sich üblicherweise als Produkt aus Förderquerschnitt multipliziert mit der Strömungsgeschwindigkeit ergibt, wird die Ausdehnungsfähigkeit des Förderschlauches zweckmäßigerweise auch auf diese Anforderungen hin ausgelegt, so dass die radiale und umfangsmäßige Ausdehnungsfähigkeit des Förderschlauches im Förderquerschnitt bei gegebenem Volumenstrom der in dem Förderquerschnitt geförderten feinteiligen Partikel auf eine damit verbundene, maximal tolerierte Durchmesservergrößerung des Förderquerschnittes beschränkt ist. Hierdurch wird dann eine Verminderung der Strömungsgeschwindigkeit bewirkt.

Ebenso ist es gegebenenfalls zweckmäßig, dass die radiale und umfangsmäßige Ausdehnungsfähigkeit des Förderschlauches im Förderquerschnitt bei gegebener Strömungsgeschwindigkeit der in dem Förderquerschnitt geförderten feinteiligen Partikel auf eine damit verbundene, maximal tolerierbare Durchmesservergrößerung des Förderquerschnittes beschränkt ist. Hierdurch wird dann eine Verminderung des Volumenstroms bewirkt.

Bezugsgröße der vorstehend erläuterten maximalen Verminderungen von Strömungsgeschwindigkeit oder Volumenstrom ist die jeweilige Nenngröße, für die die Förderleitung bzw. der Förderschlauch in Abhängigkeit vom gewünschten Förderzustand ausgelegt ist. Ist die Auslegung beispielsweise hinsichtlich einer Strömungsgeschwindigkeit von 10 m/s erfolgt, so wäre eine maximal zulässige Verminderung der Strömungsgeschwindigkeit um 10 % erreicht, wenn die Strömungsgeschwindigkeit auf 9 m/s abfallen würde.

Insbesondere ist die erfindungsgemäße Fördervorrichtung für die Förderung hochkohäsiver Partikel in der Dichtstromförderung geeignet, so dass sich die Erfindung zum einen in Weiterbildung dadurch auszeichnet, dass der Förderschlauch für eine Flugstromförderung, eine Strähnenförderung, eine Dünnstromförderung oder eine Dichtstromförderung, vorzugsweise mit Strömungsgeschwindigkeiten von < 10 m/s, ausgelegt ist, und zum anderen der Förderschlauch für die pneumatische Förderung kohäsiver feinteiliger Partikel, insbesondere Metalloxidpartikel, vorzugsweise Titandioxidpigment, oder Rußpartikel ausgelegt ist.

Die oben stehende Aufgabe wird weiterhin auch gelöst durch die Verwendung einer Fördervorrichtung nach einem der Ansprüche 1 bis 14 zur pneumatischen Förderung kohäsiver, insbesondere auch abrasiver, feinteiliger Partikel, vorzugsweise Metalloxidpartikel oder Ruß, insbesondere mittels Flugförderung oder Strähnenförderung oder Dünnstromförderung oder Dichtstromförderung, vorzugsweise mit Strömungsgeschwindigkeiten von < 10 m/s.

Bei einem gattungsgemäßen Förderschlauch wird die oben stehende Aufgabe dadurch gelöst, dass der Förderschlauch unter Verwendung eines elastomeren Werkstoffes hergestellt und im druckluftbeaufschlagten Förderzustand frei ausdehnungsfähig, eine Querkontraktion ermöglichend sowie sich druckabhängig radial und umfangsmäßig (aus)dehnbar und sich wieder zusammenziehend ausgebildet und gelagert ist, wobei die Ausdehnung des Förderschlauches auf eine Außenumfangsvergrößerung von maximal 25 % bezogen auf den Außenumfang in unbelastetem Nichtförderzustand beschränkt ist.

Erfindungsgemäße Ausgestaltungen des Förderschlauches ergeben sich aus den darauf rückbezogenen Unteransprüchen.

Mit dem erfindungsgemäßen Förderschlauch sind dieselben Vorteile und Verbesserungen erreichbar, wie sie vorstehend im Zusammenhang mit der erfindungsgemäßen Förderleitung beschrieben sind.

Ebenso wird die oben stehende Aufgabe auch gelöst durch die Verwendung eines Förderschlauches nach einem der Ansprüche 16 bis 24 zur pneumatischen Förderung kohäsiver, insbesondere auch abrasiver, feinteiliger Partikel, vorzugsweise Metalloxidpartikel oder Ruß, insbesondere mittels Flugförderung oder Strähnenförderung oder Dünnstromförderung oder Dichtstromförderung, vorzugsweise mit Strömungsgeschwindigkeiten von < 10 m/s.

Schließlich wird die oben stehende Aufgabe bei einem Verfahren der eingangs bezeichneten Art dadurch gelöst, dass das Schüttgut in einer aus mindestens einem druckabhängig umfangsmäßig und radial begrenzt ausdehnungsfähigen und vorzugsweise umhüllungsfrei angeordneten Förderschlauch aus polymerem, insbesondere elastomerem, Material gebildeten Förderleitung, die vorzugsweise eine Gummiinnenseite aufweist, unter Ausbildung einer Flugförderung oder Strähnenförderung oder Dünnstromförderung oder Dichtstromförderung jeweils mit Sekundär- oder Nebenluftunterstützung gefördert wird, wobei die Ausdehnung der Förderleitung und/oder des Förderschlauches auf eine Außenumfangsvergrößerung von maximal 25% bezogen auf den Außenumfang im unbelasteten Nichtförderzustand beschränkt ist.

Dabei zeichnet sich das erfindungsgemäße Verfahren in vorteilhafter Weiterbildung und Ausgestaltung zusätzlich dadurch aus, dass es unter Verwendung einer Fördervorrichtung nach einem der Ansprüche 1 bis 14 durchgeführt wird und/oder dass es unter Verwendung eines Förderschlauches nach einem der Ansprüche 16 bis 24 durchgeführt wird.

Mit dem erfindungsgemäßen Verfahren sind dieselben Vorteile verbunden, wie sie vorstehend im Zusammenhang mit den verschiedenen Merkmalen der erfindungsgemäßen Fördervorrichtung dargelegt worden sind.

Die Erfindung ist nachstehend anhand der Zeichnung beispielhaft näher erläutert. Diese zeigt in
- Fig. 1: in perspektivischer Aufsicht einen Förderschlauch einer erfindungsgemäßen Fördervorrichtung,
- Fig. 2: in teilweise gebrochener Darstellung einen Endbereich eines Förderschlauches einer erfindungsgemäßen Fördervorrichtung und in
- Fig. 3: in schematischer Darstellung eine erfindungsgemäße Fördervorrichtung.

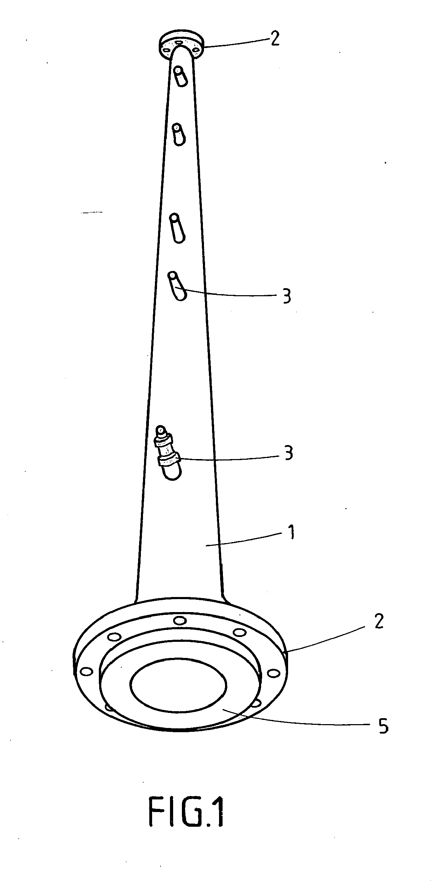

Die Fig. 1 zeigt einen insgesamt mit 1 bezeichneten Förderschlauch, der an beiden Längsendseiten mit einem metallischen Anschlussflansch 2 in Form eines Hinterlegflansches versehen ist, der es ermöglicht, mehrere vorzugsweise identisch aufgebaute Förderschläuche 1, 1' aneinander anzuflanschen und somit eine aus mehreren Förderschläuchen 1, 1' bestehende Förderleitung 7 herzustellen. Aus der Umfangswand des Förderschlauches 1 ragen mehrere, beabstandet zueinander angeordnete und mit Durchtritt zur Rohrinnenseite versehene Bypass-Ventile 3 hervor. Die Bypass-Ventile 3 sind entweder direkt in die aus Gummi, natürlichem oder synthetischem Kautschuk oder Mischungen daraus bestehende oder zumindest Schichten aus diesen Materialien aufweisende Umfangswand 8 des Förderschlauches 1, 1' einvulkanisiert oder jeweils in ein ein Innengewinde aufweisendes Röhrchen oder einen Rohrstutzen 4 eingeschraubt.

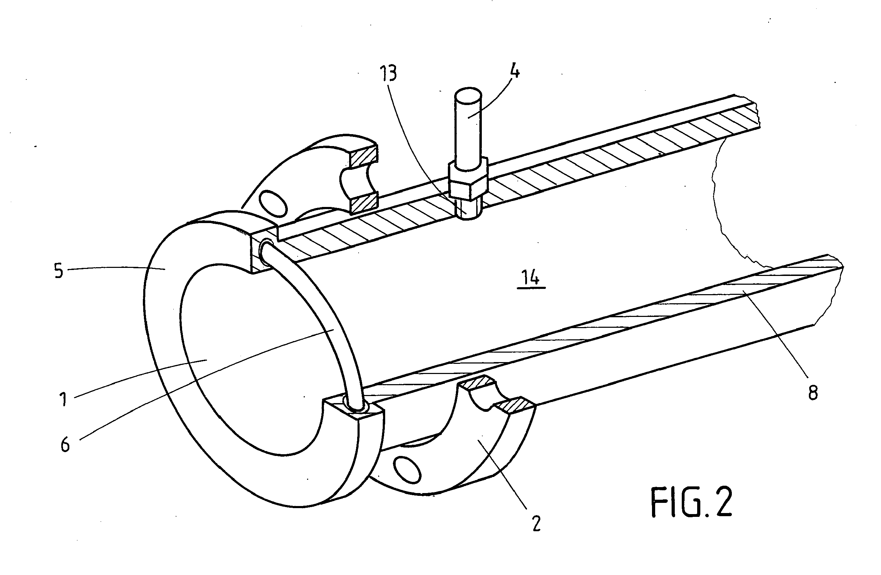

Die Fig. 2 zeigt einen Förderschlauch 1 abschnittsweise an einem Längsende in teilweise geschnittener Darstellung. Dort ist die Schlauchwand 8 durchdringend ein Röhrchen oder Rohrstutzen 4 einvulkanisiert und befestigt, in welchem ein Bypass-Ventil 3 oder eine Bypass-Düse angeordnet sein kann. Hierdurch wird eine in den Förderschlauchinnenraum 14 einmündende Einblasöffnung 13 ausgebildet. In nicht dargestellter Weise besteht das Bypass-Ventil 3 aus einem metallischen Körper, in welchem das eigentliche Ventil ausgebildet ist. Auf der Ventilausgangsseite ist der metallische Körper mit einem Innengewinde versehen, in welches eine Kerze aus Sintermetall eingeschraubt ist. Diese Kerze aus Sintermetall ist innen hohl und stellt somit einen Körper dar, in den aus dem eigentlichen Ventil austretende Bypassluft innenseitig von der Bypass-Leitung 9 zugeführt eintritt und durch die poröse Sinterwandung hindurch nach außen dann in den Förderschlauchinnenraum 14 austritt. Das Bypass-Ventil ist als Rückschlagventil ausgebildet und wird mittels eines an der Außenseite des Metallkörpers angeordneten Außengewindes in ein Innengewinde des Röhrchens oder Rohrstutzens 4 eingeschraubt. Der Kerzenkörper oder die Kerze erstreckt sich dann längs des bündig zur Innenwand in den Gummischlauch einvulkanisierten Rohrstutzens 4, so dass aus dem Bypass-Ventil 3 austretende Bypass-Luft den Kerzenkörper durchdringen und dann in den Bereich des Rohrstutzens oder die Schlauchleitung bzw. den Schlauch 1, 1' eintreten kann. Das Bypass-Ventil öffnet bei einem Druckabfall infolge einer Verstopfung im Förderschlauch 1, 1' und lässt dann Nebenluft oder Bypass-Luft in den Förderschlauch 1, 1' eindringen. Diese Nebenluft lockert den Stopfen auf und bewirkt dann, dass der Verschiebedruck (ΔP vor und hinter dem Stopfen oder Pfropfen)den Stopfen weiterbewegt, also weiterfördert. Der Druck in Fließrichtung bzw. in Förderrichtung auf der Seite vor dem Stopfen oder Pfropfen, überwindet die Haltekräfte des Stopfens/Pfropfens zur Innenwand des Förderschlauches 1, 1'. Da das Bypass-Ventil 3 in einen Rohrstutzen 4 eingeschraubt ist, ist es von außen zu erreichen und leicht zu montieren und demontieren.

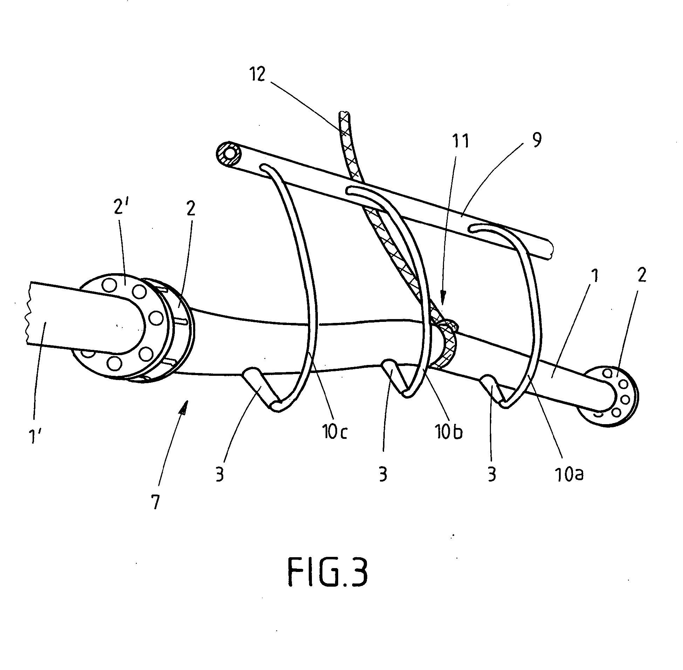

Die Bypass-Düsen oder Bypass-Ventile 3 stehen in Leitungsverbindung 10a, 10b, 10c zu einer in Fig. 3 dargestellten Bypass-Leitung 9, mit welcher Sekundärluft, Nebenluft oder Bypassluft in den Innenraum des Rohrschlauches 1, 1' eingeblasen oder eingeleitet werden kann. Der Förderschlauch 1, 1' weist längsendseitig eine Anschlussfläche 5 auf, die kreisringförmig ausgebildet aus dem Umfang des Förderschlauches 1, 1' hervorsteht und einteilig mit der Umfangswand des Förderschlauches 1, 1' ausgebildet, insbesondere aber an diesen anvulkanisiert ist. Die Anschlussfläche 5 weist innenseitig einen Verstärkungsring 6 auf und bildet eine Anschlagsfläche für einen daran zur Verbindung zweier Rohrschläuche festzulegenden Verbindungs- oder Befestigungsflansch 2, 2' aus.

Ein Förderschlauch 1, 1' weist beispielsweise eine Nennweite von 100 mm Innendurchmesser auf, die im unbelasteten Zustand die Förderquerschnittsfläche definiert. Die Länge eines solchen Schlauches beträgt beispielsweise 5,60 m. Der Schlauch ist nun unter Verwendung eines elastomeren Werkstoffes, insbesondere Gummi, derart begrenzt ausdehnungsfähig ausgebildet, dass sich der Nenn-Durchmesser von 100 mm auf maximal 105 mm und der Außenumfang des Schlauches um maximal 3 bis 4 mm im Falle von Anbackungen, Verstopfungen oder Pfropfenbildung im Förderquerschnitt vergrößern kann. Hierbei verkürzt sich der Schlauch dann um maximal 35 mm, in der Regel aber um lediglich ca. 1 mm. Dies bei einem Förderzustand, der mit einem Förderdruck von 4 bar verbunden ist.

Die Innenseite des Förderschlauches 1 besteht aus einer Nutz- oder Verschleißschicht aus Gummi oder Kautschuk und ist bei den vorstehend angegebenen Bedingungen 4 mm stark. Um diese Nutzschicht herum ist ein- oder zweilagig oder mehrlagig eine druckresistente oder druckbeständige, aber zumindest in Maßen ausdehnungsfähige Trägerschicht oder Druckträgerschicht ebenfalls in einer Dicke von 4 mm aufgebracht. Diese Träger- oder Druckträgerschicht bildet eine Kunststoff- oder Textilarmierung aus einem insbesondere gegenüber Gummi weniger ausdehnungsfähigem Material aus. Vorzugsweise wird diese Druckträgerschicht aus (aus) dehnungsfähigem textilem Material, insbesondere (aus) dehnungsfähigem Textilgewebe, hergestellt. Außenseitig kann gegebenenfalls nochmals eine (aus)dehnungsfähige Gummischicht oder Kunststoffschicht aufgebracht sein. Die Druckträgerschicht bildet eine Armierung des Förderschlauches aus Kunststoff aus. Der Aufbau eines solchen Schlauches ist insofern Stand der Technik, als es dem Fachmann geläufig ist, "Gummi"-Förderschläuche beliebiger Dimension und für beliebige Einsatzzwecke herzustellen. Allerdings ist im erfindungsgemäßen Fall die Armierung aus Gewebe, vorzugsweise Textilgewebe, so ausgelegt, dass der Förderschlauch 1, 1' sich umfangsmäßig unter Vergrößerung der Förderquerschnittsfläche bei entsprechend ansteigendem oder anstehendem Innendruck begrenzt ausdehnen kann und bei nachlassendem Innendruck anschließend wieder auf seine Ausgangsgröße zusammenziehen kann. Der erfindungsgemäße Schlauch ist somit dadurch gekennzeichnet, dass eine Querkontraktion im Sinne einer Umfangsvergrößerung und Rückkehr in den Ursprungszustand möglich ist, diese aber erfindungsgemäß auf ein Maß von 25% begrenzt ist.

Der Förderschlauch 1, 1' ist in sich flexibel sowie quer zur Strömungsrichtung, radial, über seinen Umfang und in der Länge begrenzt ausdehnungsfähig und wieder zusammenziehfähig, wozu er aufgrund der Ausbildung seiner Umfangswand 8 im Wesentlichen aus elastomerem oder unter der Verwendung von elastomerem Material oder Werkstoff in der Lage ist.

Der Förderschlauch 1, 1' ist Bestandteil einer Förderleitung 7, in der pneumatisch feinteilige Partikel, insbesondere kohäsive Partikel, wie Eisenoxidpigmente oder Titandioxidpigmente oder Rußpartikel, gefördert werden. Insbesondere bildet der Förderschlauch 1, 1' die Förderleitung 7 im Wesentlichen aus und ist diese aus Förderschläuchen 1, 1' aufgebaut. Über eine große Transportlänge bilden die Förderschläuche 1, 1' in aneinander angeflanschter Reihung die Förderleitung 7 aus. Je nach gewünschtem Förderzustand, der eine Flugförderung, eine Strähnenförderung, eine Fließförderung, eine Pfropfenförderung, eine Dünnschichtförderung oder eine Dichtschichtförderung umfassen kann, herrscht im Inneren der Förderleitung bzw. der einzelnen Förderschläuche 1, 1' ein Förderdruck von bis zu 10 bar bei Fördergeschwindigkeiten von 1 bis 40 m/s. Jeder Förderschlauch 1, 1' der Förderleitung 7 ist in der in Fig. 3 schematisch dargestellten Weise umhüllungsfrei, begrenzt frei ausdehnfähig und im Wesentlichen frei beweglich ausgebildet und gelagert. Sie ist in eine Relativbewegung zu Befestigungsbereichen 11 ermöglichend in beabstandeten Unterstützungselementen 12 gehalten, die unter Ausbildung einer Schlaufenform aus textilem Bandmaterial gebildet sind. Im Ausführungsbeispiel der Fig. 3 sind die Förderschläuche 1, 1' hängend in Schlaufen eines bandförmigen Unterstützungselementes 12 gehalten, wobei lediglich eine Befestigung des Förderschlauches 1 dargestellt ist. Aus dem Förderschlauch oder aus mehreren Förderschläuchen 1, 1' lassen sich somit Förderleitungen 7 mit einer Länge von 100 m und mehr bilden. Jeder Förderschlauch 1 ist neben seiner frei ausdehnungsfähigen Lagerung/Halterung in Unterstützungselementen 12 aufgrund seiner Ausbildung unter Verwendung eines elastomeren Werkstoffes in sich ausdehnungsfähig ausgebildet. Die Ausdehnungsfähigkeit ist dabei förderdruckabhängig derart ausgelegt und ausgebildet, dass die umfangsmäßige Ausdehnung des Förderquerschnittes des Förderschlauches 1, 1' im druckluftbeaufschlagten Förderzustand auf eine Vergrößerung des Außenumfanges im Förderquerschnitt um höchstens 25 %, insbesondere im Bereich von 0,5-25 %, vorzugsweise zwischen 1 und 10 %, besonders bevorzugt zwischen 2 und 6 %, gegenüber dem Außenumfang im unbelasteten Nichtförderzustand beschränkt ist. Der Förderschlauch 1, 1' kann somit sich ausdehnen, d. h. expandieren, sich aber aufgrund seiner Elastizität und Flexibilität aber auch wieder Zusammenziehen. Hierbei bewirkt, wie vorstehend für den Förderschlauch 1 mit einer Nennweite von 100 mm dargelegt, eine Ausdehnung umfangsmäßiger Art, die zu einer Auswölbung in diesem Bereich in der Förderschlauchwand 8 führt, eine Verkürzung des Förderschlauches 1 bezüglich seiner Länge. Im druckbeaufschlagten Förderzustand ist der Förderschlauch 1 daher bei Bildung von Anbackungen oder Pfropfen in der Lage, aufgrund des sich dadurch einstellenden Druckabfalls/Druckanstiegs und dann wieder erfolgenden Druckanstiegs/Druckabfalls eine peristaltische Bewegung durchzuführen, die zur Auflösung von Pfropfen oder Anbackungen führt bzw. deren Entstehung verhindert. Unterstützt wird dies durch durch die Düsen oder Ventile 3 oder die Einblasöffnungen 13 zuführbare Sekundär-, Neben- oder Bypass-Luft, die durch die druckluftbeaufschlagte Bypass-Leitung 9 zur Verfügung gestellt wird. Dies ist eine übliche und bekannte Technik, so dass diese hier nicht näher erläutert ist. Der innenseitig eine Gummischicht und eine darum angeordnete Kunststoff- oder Textilarmierung, vorzugsweise in Form eines textilen Gewebes, aufweisende Förderschlauch 1, 1' ist darüber hinaus metalleinlage- oder drahteinlagefrei oder metallarmierungs- oder drahtarmierungsfrei ausgebildet. Die Ausdehnungsmöglichkeit des Förderschlauches 1, 1' wird dadurch erreicht, dass er umhüllungsfrei ausgebildet und gelagert ist. Es ist kein den Förderschlauch über seine Länge von Flansch 2 zu Flansch 2 umgebendes Hüll- oder Stützrohr vorhanden. Der Förderschlauch 1, 1' weist lediglich Halte- oder Stützelemente 12 auf, die seine Gewichtskraft auffangen. Unter "umhüllungsfrei" werden alle Halte- und Stützelemente verstanden, die zwar ggf. die Gewichtskraft eines Förderschlauches 1, 1' auffangen können, aber keine seiner Ausdehnungsbewegung entgegenwirkenden Kräfte entwickeln oder auf den jeweiligen Förderschlauch 1, 1' einwirken lassen.

Insbesondere ist der Förderschlauch 1, 1' für eine Flugstromförderung, eine Strahlenförderung, eine Dünnstromförderung oder eine Dichtstromförderung mit Selcundärluftunterstützung für Förder- bzw. Strömungsgeschwindigkeiten im Förderschlauch 1, 1' von vorzugsweise weniger als 5, insbesondere weniger als 10 m/s ausgelegt. Besonders günstig lassen sich mit dem erfindungsgemäßen Förderschlauch bzw. der erfindungsgemäßen Fördervorrichtung feinteilige kohäsive Partikel, wie Titandioxidpigmente oder Ruß fördern, die eine durchschnittliche Partikelgröße von < 80 µm, vorzugsweise < 50 µm, aufweisen, wobei Partikelgrößen von < 1 µm möglich sind. Speziell für die im Förderzustand stark abrasiv wirkenden Titandioxidpigmente ist die aus einem elastomeren Werkstoff, insbesondere Gummi oder Kautschuk, ausgebildete und damit elastische Innenseite des jeweiligen Förderschlauches 1, 1' von Vorteil. Der Verschleiß ist aufgrund der fehlenden Wirkung des Elastomermaterials vermindert. Die Teilchen wirken weniger abrasiv und werden von dem Elastomermaterial in den Förderstrom zurückgefedert.

Insbesondere ist der Förderschlauch 1, 1' umhüllungsfrei angeordnet und ausgebildet, d. h. er ist nicht innerhalb eines Rohres oder eines ähnlichen Elementes, das seine freie Ausdehnungsfähigkeit beschränken würde, angeordnet.

In einer im Wesentlichen über einen großen Teil ihrer Länge aus Förderschläuchen 1, 1' bestehenden Förderleitung 7 lassen sich die verschiedensten Schüttgüter pneumatisch fördern. Insbesondere sind die Schläuche 1, 1' aber für Metalloxidpigmente, wie Eisenoxidpigment oder Titandioxidpigment, und Rußpartikel geeignet. Neben einer Flugförderung, einer Strähnenförderung, einer Pfropfenförderung oder einer Dünnstromförderung ist mit der Fördervorrichtung auch eine Dichtstromförderung mit Sekundär- oder Nebenluftzuführung möglich.

## Patentansprüche

1. Fördervorrichtung zur pneumatischen Förderung feinteiliger Partikel, umfassend eine druckluftbeaufschlagte, eine Innenschicht aus einem polymeren, insbesondere elastomeren, Werkstoff aufweisende Förderleitung (7) mit daran in diese einmündend angeordneten Einblasöffnungen (13) und/oder Düsen und/oder Ventilen (3), die mit einer der Förderleitung (7) Sekundär- oder Nebenluft zuführenden druckluftbeaufschlagten Bypass-Leitung (9) in Leitungsverbindung stehen,
**dadurch gekennzeichnet,**
**dass** die druckluftbeaufschlagte Förderleitung (7) aus mindestens einem im druckluftbeaufschlagten Förderzustand eine Querkontraktion ermöglichenden, frei ausdehnungsfähig ausgebildeten und gelagerten, unter Verwendung eines elastomeren Werkstoffes hergestellten Förderschlauch (1, 1') aufgebaut ist, wobei der Förderschlauch (1, 1') druckabhängig radial und umfangsmäßig (aus)dehnbar und sich wieder zusammenziehend ausgebildet und die Ausdehnung der Förderleitung (7) und/oder des mindestens einen Förderschlauchs (1, 1') auf eine Außenumfangsvergrößerung von maximal 25 % bezogen auf den Außenumfang im unbelasteten Nichtförderzustand beschränkt ist.

2. Vorrichtung nach Anspruch 1, **dadurch gekennzeichnet, dass** der Förderschlauch (1) förderdruckabhängig derart ausdehnungsfähig ausgelegt und ausgebildet ist, dass die umfangsmäßige Ausdehnung seines Förderquerschnittes im druckluftbeaufschlagten Förderzustand auf eine Vergrößerung seines Außenumfanges im Förderquerschnitt um höchstens 25 %, insbesondere im Bereich von 0,5 - 25 %, vorzugsweise zwischen 1 und 10 %, besonders bevorzugt zwischen 2 und 6 % gegenüber dem Außenumfang im unbelasteten Nichtförderzustand beschränkt ist.

3. Fördervorrichtung nach Anspruch 1 oder 2, **dadurch gekennzeichnet, dass** der Förderschlauch (1) im druckluftbeaufschlagten Förderzustand eine gleichzeitig expandierende und kontraktierende, insbesondere peristaltische Bewegung ermöglichend ausgebildet und gelagert ist.

4. Fördervorrichtung nach einem der Ansprüche 1 bis 3, **dadurch gekennzeichnet, dass** der Förderschlauch (1, 1') umhüllungsfrei ausgebildet und gelagert ist.

5. Fördervorrichtung nach einem der vorhergehenden Ansprüche, **dadurch gekennzeichnet, dass** der Förderschlauch (1) unter Verwendung von Gummi, natürlichem oder synthetischem Kautschuk und/oder Mischungen daraus hergestellt ist oder zumindest im Wesentlichen aus einem oder mehreren dieser Materialien besteht.

6. Fördervorrichtung nach einem der vorhergehenden Ansprüche, **dadurch gekennzeichnet, dass** der Förderschlauch (1) metalleinlagefrei oder drahteinlagefrei oder metallarmierungsfrei oder drahtarmierungsfrei ausgebildet ist.

7. Fördervorrichtung nach einem der vorhergehenden Ansprüche, **dadurch gekennzeichnet, dass** der Förderschlauch (1) eine innenseitige Gummischicht mit einer darum angeordneten druckbeständigen Trägerschicht, vorzugsweise in Form einer gegenüber Gummi weniger ausdehnungsfähigen Kunststoff- oder Textilarmierung, insbesondere eines Textilgewebes, aufweist.

8. Fördervorrichtung nach einem der vorhergehenden Ansprüche, **dadurch gekennzeichnet, dass** der Förderschlauchinnenraum (14) in Leitungsverbindung mit der Bypass-Leitung (9) steht.

9. Fördervorrichtung nach einem der vorhergehenden Ansprüche, **dadurch gekennzeichnet, dass** der Förderschlauch (1) in seine Umfangswand (8) einvulkanisierte Rohrstutzen (4) zur Aufnahme der Einblasöffnungen (13) oder der Düsen oder Ventile (3) und/oder einvulkanisierte Einblasöffnungen (13) und/oder einvulkanisierte Düsen und/oder einvulkanisierte Ventile (3) aufweist.

10. Fördervorrichtung nach einem der vorhergehenden Ansprüche, **dadurch gekennzeichnet, dass** längsendseitig jeweils ein Anschlussflansch (2) aus Metall an den Förderschlauch (1) anvulkanisiert ist oder in diesen einvulkanisiert ist oder dass längsendseitig jeweils eine Anschlussfläche (5) aus Förderschlauchmaterial als Anlagefläche für einen insbesondere metallischen Anschlussflansch (2) ausgebildet ist.

11. Fördervorrichtung nach einem der vorhergehenden Ansprüche, **dadurch gekennzeichnet, dass** der Förderschlauch (1) frei ausdehnungsfähig in beabstandeten Unterstützungselementen (12) gelagert ist.

12. Fördervorrichtung nach einem der vorhergehenden Ansprüche, **dadurch gekennzeichnet, dass** der Förderschlauch (1) frei ausdehnungsfähig in schlaufenförmigen Unterstützungselementen (12), insbesondere Bändern, vorzugsweise aus einem textilen Material, hängend gehalten ist.

13. Fördervorrichtung nach einem der vorhergehenden Ansprüche, **dadurch gekennzeichnet, dass** der Förderschlauch (1) für eine Flugstromförderung, eine Strähnenförderung, eine Dünnstromförderung oder eine Dichtstromförderung, vorzugsweise mit Strömungsgeschwindigkeiten von < 10 m/s, ausgelegt ist.

14. Fördervorrichtung nach einem der vorhergehenden Ansprüche, **dadurch gekennzeichnet, dass** der Förderschlauch (1) für die pneumatische Förderung kohäsiver feinteiliger Partikel, insbesondere Metalloxidpartikel, vorzugsweise Titandioxidpigment, oder Rußpartikel ausgelegt ist.

15. Verwendung einer Fördervorrichtung nach einem der Ansprüche 1 bis 14 zur pneumatischen Förderung kohäsiver, insbesondere auch abrasiver, feinteiliger Partikel, vorzugsweise Metalloxidpartikel oder Ruß, insbesondere mittels Flugförderung oder Strähnenförderung oder Dünnstromförderung oder Dichtstromförderung, vorzugsweise mit Strömungsgeschwindigkeiten von < 10 m/s.

16. Förderschlauch einer mindestens einen Förderschlauch (1, 1') und eine daraus aufgebaute, druckluftbeaufschlagte und eine Innenschicht aus einem polymeren, insbesondere elastomeren, Werkstoff aufweisende Förderleitung (7) umfassenden Fördervorrichtung zur pneumatischen Förderung feinteiliger Partikel, wobei die Förderleitung (7) daran in diese einmündend angeordnete Einblasöffnungen und/oder Düsen und/oder Ventile (3), die mit einer der Förderleitung (7) Sekundär- oder Nebenluft zuführenden druckluftbeaufschlagten Bypass-Leitung (9) in Leitungsverbindung stehen, aufweist,
**dadurch gekennzeichnet,**
**dass** der Förderschlauch (1, 1') unter Verwendung eines elastomeren Werkstoffes hergestellt und im druckluftbeaufschlagten Förderzustand frei ausdehnungsfähig, eine Querkontraktion ermöglichend sowie sich druckabhängig radial und umfangsmäßig (aus)dehnbar und sich wieder zusammenziehend ausgebildet und gelagert ist, wobei die Ausdehnung des Förderschlauches (1, 1') auf eine Außenumfangsvergrößerung von maximal 25 % bezogen auf den Außenumfang im unbelasteten Nichtförderzustand beschränkt ist.

17. Förderschlauch nach Anspruch 16, **dadurch gekennzeichnet, dass** er förderdruckabhängig derart ausdehnungsfähig ausgelegt und ausgebildet ist, dass die umfangsmäßige Ausdehnung seines Förderquerschnittes im druckluftbeaufschlagten Förderzustand auf eine Vergrößerung seines Außenumfanges im Förderquerschnitt um höchstens 25 %, insbesondere im Bereich von 0,5 - 25 %, vorzugsweise zwischen 1 und 10 %, besonders bevorzugt zwischen 2 und 6 % gegenüber dem Außenumfang im unbelasteten Nichtförderzustand beschränkt ist.

18. Förderschlauch nach Anspruch 16 oder 17, **dadurch gekennzeichnet, dass** er im druckluftbeaufschlagten Förderzustand eine gleichzeitig expandierende und kontraktierende, insbesondere peristaltische Bewegung ermöglichend ausgebildet und gelagert ist.

19. Förderschlauch nach einem der Ansprüche 16 bis 18, **dadurch gekennzeichnet, dass** er umhüllungsfrei ausgebildet und gelagert ist.

20. Förderschlauch nach einem der Ansprüche 16 bis 19, **dadurch gekennzeichnet, dass** er unter Verwendung von Gummi, natürlichem oder synthetischem Kautschuk und/oder Mischungen daraus hergestellt ist oder zumindest im Wesentlichen aus einem oder mehreren dieser Materialien besteht.

21. Förderschlauch nach einem der Ansprüche 16 bis 20, **dadurch gekennzeichnet, dass** er metalleinlagefrei oder drahteinlagefrei oder metallarmierungsfrei oder drahtarmierungsfrei ausgebildet ist.

22. Förderschlauch nach einem der Ansprüche 16 bis 21, **dadurch gekennzeichnet, dass** er eine innenseitige Gummischicht mit einer darum angeordneten druckbeständigen Trägerschicht, vorzugsweise in Form einer gegenüber Gummi weniger ausdehnungsfähigen Kunststoff- oder Textilarmierung, insbesondere eines Textilgewebes, aufweist.

23. Förderschlauch nach einem der Ansprüche 16 bis 22, **dadurch gekennzeichnet, dass** er in seine Umfangswand (8) einvulkanisierte Rohrstutzen (4) zur Aufnahme der Einblasöffnungen (13) oder der Düsen oder Ventile (3) und/oder einvulkanisierte Einblasöffnungen (13) und/oder einvulkanisierte Düsen und/oder einvulkanisierte Ventile (3) aufweist.

24. Förderschlauch nach einem der Ansprüche 16 bis 23, **dadurch gekennzeichnet, dass** längsendseitig jeweils ein Anschlussflansch (2) aus Metall an den Förderschlauch (1) anvulkanisiert ist oder in diesen einvulkanisiert ist oder dass längsendseitig jeweils eine Anschlussfläche (5) aus Förderschlauchmaterial als Anlagefläche für einen insbesondere metallischen Anschlussflansch (2) ausgebildet ist.

25. Verwendung eines Förderschlauches (1, 1') nach einem der Ansprüche 16 bis 24 zur pneumatischen Förderung kohäsiver, insbesondere auch abrasiver, feinteiliger Partikel, vorzugsweise Metalloxidpartikel oder Ruß, insbesondere mittels Flugförderung oder Strähnenförderung oder Dünnstromförderung oder Dichtstromförderung, vorzugsweise mit Strömungsgeschwindigkeiten von < 10 m/s.

26. Verfahren zur pneumatischen Förderung feinteiligen, insbesondere kohäsiven und partikelförmigen Schüttgutes, vorzugsweise aus Metalloxidpigment oder Ruß, wobei das Schüttgut in einer druckluftbeaufschlagten Förderleitung (7) mit Zufuhrmöglichkeit von Sekundär- oder Nebenluft durch Bypass-Öffnungen (4) in der Förderleitungswand (8) pneumatisch gefördert wird,
**dadurch gekennzeichnet,**
**dass** das Schüttgut in einer aus mindestens einem druckabhängig umfangsmäßig und radial begrenzt ausdehnungsfähigen und vorzugsweise umhüllungsfrei angeordneten Förderschlauch (1, 1') aus polymerem, insbesondere elastomerem, Material gebildeten Förderleitung (7), die vorzugsweise eine Gummiinnenseite aufweist, unter Ausbildung einer Flugförderung oder Strähnenförderung oder Dünnstromförderung oder Dichtstromförderung jeweils mit Sekundär- oder Nebenluftunterstützung gefördert wird, wobei die Ausdehnung der Förderleitung (7) und/oder des Förderschlauches (1, 1') auf eine Außenumfangsvergrößerung von maximal 25 % bezogen auf den Außenumfang im unbelasteten Nichtförderzustand beschränkt ist.

27. Verfahren nach Anspruch 26, **dadurch gekennzeichnet, dass** es unter Verwendung einer Fördervorrichtung nach einem der Ansprüche 1 bis 14 durchgeführt wird.

28. Verfahren nach Anspruch 26 oder 27, **dadurch gekennzeichnet, dass** es unter Verwendung eines Förderschlauchs (1, 1') nach einem der Ansprüche 16 bis 24 durchgeführt wird.
